# EUROPÄISCHE PATENTSCHRIFT

(11) **EP 3 260 272 B1**
(45) Veröffentlichungstag und Bekanntmachung des Hinweises auf die Patenterteilung: **17.10.2018**
(21) Anmeldenummer: 17177714.7
(22) Anmeldetag: 23.06.2017
(51) Int. Cl.: B29C 64/165, B29C 64/255, B29C 64/259

(54) **VORRICHTUNG ZUR HERSTELLUNG WENIGSTENS EINES DREIDIMENSIONALEN BAUTEILS FÜR DIE BAUINDUSTRIE**
DEVICE FOR THE PRODUCTION OF AT LEAST ONE THREE-DIMENSIONAL COMPONENT FOR THE BUILDING INDUSTRY
DISPOSITIF DE FABRICATION D'AU MOINS UN COMPOSANT TRIDIMENSIONNEL POUR L'INDUSTRIE DE LA CONSTRUCTION

(30) Priorität: 23.06.2016 AT 505692016
(43) Veröffentlichungstag der Anmeldung: 27.12.2017
(73) Patentinhaber: METALLCONCEPT GMBH, 39058 Sarnthein (IT); Progress Maschinen & Automation AG, 39042 Brixen (IT)
(72) Erfinder: WOHLGEMUTH, Kurt, 39058 Sarnthein (IT)
(74) Vertreter: Torggler & Hofinger Patentanwälte

(56) Entgegenhaltungen:
- WO-A1-2011/120505
- WO-A1-2015/141776
- WO-A2-2005/097476
- WO-A2-2006/100556

## Beschreibung

Die Erfindung betrifft eine Vorrichtung zur Herstellung wenigstens eines dreidimensionalen Bauteils für die Bauindustrie aus einer Mehrzahl von auf einer Druckplattform übereinander angeordneter Schichten aus Partikelmaterial, die in örtlich vorbestimmten Bereichen verfestigt und miteinander zum wenigstens einen dreidimensionalen Bauteil verbunden sind, umfassend wenigstens einen Druckrahmen, an welchem wenigstens eine Beschichtungsvorrichtung zur schichtweisen Auftragung des Partikelmaterials auf der Druckplattform und wenigstens ein Druckkopf zur Abgabe wenigstens eines Bindemittels an den örtlich vorbestimmten Bereichen verfahrbar gelagert sind, und ein Gestell, an welchem der Druckrahmen in Gebrauchslage der Vorrichtung zumindest in vertikaler Richtung verstellbar gelagert ist. Die Erfindung betrifft weiterhin ein Verfahren zum Betrieb einer solchen Vorrichtung.

Die gegenständliche Erfindung betrifft das technische Gebiet des 3D-Drucks in der Bauindustrie. Diesbezüglich werden im Wesentlichen drei Prozesstypen voneinander unterschieden, wobei zwei dieser Prozesstypen, nämlich das "Contour Crafting" und das "Concrete Printing" sehr verwandt sind und Prozesse definieren, in denen ein viskoses Betongemisch durch Düsen in situ verspritzt wird und selbst aushärtet.

Daneben unterscheidet man als dritten Prozesstyp 3D-Druck-Verfahren auf Basis pulverförmiger Werkstoffe, die unter dem Einfluss zumindest eines Binders zu einem dreidimensionalen Bauteil verbunden werden. Zumeist wird hierzu ein Partikelmaterial schichtweise aufgetragen und in örtlich vorbestimmten Bereichen durch Abgabe wenigstens eines Bindemittels verfestigt und miteinander verbunden.

Dieses Verfahren kommt auf anderen technischen Gebieten bereits seit längerer Zeit zum Einsatz, wobei die Druckplattform in der Regel während des Druckprozesses nach unten verfahren wird bis der Druckprozess abgeschlossen ist. Zur seitlichen Begrenzung des schichtweise aufgetragenen Partikelmaterials werden beispielsweise Seitenwände abgerollt, wie dies in der DE 10 2013 018 031 A1 beschrieben ist. Diese Lösung eignet sich aber nicht zur Herstellung dreidimensionaler Bauteile für die Bauindustrie, da man es hier mit sehr viel größeren Dimensionen und Gewichten zu tun hat. Die bedruckte Druckplattform weist beispielsweise bei der Herstellung dreidimensionaler Bauteile für die Bauindustrie mehrere Tonnen Gewicht auf. Gleichzeitig besteht der Wunsch, sehr dünne Schichten aus Partikelmaterial, vorzugsweise in der Größenordnung von 1-2 mm, aufzutragen. Mit dieser Präzision müsste also die Druckplattform abgesenkt werden, was aufgrund des enormen Gewichts kaum möglich ist.

Nun könnte man sich überlegen, die Druckplattform während des Druckprozesses nicht zu bewegen und stattdessen den Druckrahmen zu verfahren. Hierzu gibt es auf anderen technischen Gebieten bereits ebenfalls Lösungen. Beispielsweise beschreibt die EP 1 872 928 A1 eine Lösung, bei welcher die Druckplattform unbeweglich ist und Seitenwände zur seitlichen Begrenzung des Partikelmaterials in dem Partikelmaterial mitgedruckt werden. Aber auch diese Lösung eignet sich nicht zur Herstellung dreidimensionaler Bauteile für die Bauindustrie, da die solchermaßen hergestellten Seitenwände aufgrund des angesprochenen großen Druckvolumens eine sehr große Materialmenge beanspruchen. Dies ist problematisch, da nach erfolgtem Druck die Seitenwände entsorgt werden müssten, das heißt dass der Materialverlust aufgrund der Ausbildung der Seitenwände sehr hoch wäre, was in weiterer Folge mit hohen Kosten verbunden wäre.

Die WO2006/100556 A2 beschreibt eine Vorrichtung zum Herstellen eines dreidimensionalen Bauteils durch additive Fertigung. Die Aufgabe der vorliegenden Erfindung besteht also darin, eine gegenüber dem Stand der Technik verbesserte Vorrichtung gemäß dem Oberbegriff des Anspruchs 1 bzw. ein Verfahren zum Betrieb einer solchen Vorrichtung anzugeben, wobei bei dieser Vorrichtung die genannten Nachteile vermieden werden, und welche Vorrichtung es insbesondere ermöglicht, die Druckplattform während des Druckvorgangs feststehend zu belassen und gleichzeitig eine kostengünstige und praktikable Lösung zur seitlichen Begrenzung des Partikelmaterials vorzusehen.

Diese Aufgabe wird gelöst durch die Merkmale der unabhängigen Ansprüche 1 bzw. 12.

Es ist also bei der Vorrichtung zur Herstellung wenigstens eines dreidimensionalen Bauteils für die Bauindustrie vorgesehen, dass eine Koppelungsvorrichtung vorgesehen ist, mit welcher eine Begrenzungsvorrichtung zur seitlichen Begrenzung des Partikelmaterials mit dem wenigstens einen Druckrahmen lösbar koppelbar ist, so dass die Begrenzungsvorrichtung mit dem Druckrahmen bei einer Verstellung zumindest in die vertikale Richtung mitbewegbar ist.

Auf diese Weise ist es möglich, eine wiederverwendbare Begrenzungsvorrichtung zur seitlichen Begrenzung des Partikelmaterials während des Druckvorgangs mit dem wenigstens einen Druckrahmen zu koppeln und den Druckrahmen gegenüber einer während des Druckprozesses feststehenden Druckplattform in vertikaler Richtung zu verstellen und dabei gleichzeitig eine optimale seitliche Begrenzung des Partikelmaterials sicherzustellen.

Ein großer Vorteil besteht darin, dass die Druckplattform samt der Begrenzungsvorrichtung und dem wenigstens einen hergestellten dreidimensionalen Bauteil von dem Druckrahmen entfernt und zu einem Entformungsbereich transportiert werden kann, an welchem die Entformung des wenigstens einen hergestellten dreidimensionalen Bauteils erfolgt. Bei der Entformung entweicht loses Material, welches nicht Teil des Bauteils ist. Dabei kann es zu einer ungünstigen Staubentwicklung gelangen. Würde man die Entformung unmittelbar im Bereich des Druckrahmens durchführen, so bestünde die Gefahr, dass das lose Material Bestandteile des Druckrahmens, wie z.B. den Antrieb des Druckkopfes, beschädigt. Diese Gefahr ist gänzlich gebannt, wenn die Entformung an einem separaten Ort erfolgt.

Weiterhin würde der Druckrahmen die Zugänglichkeit zu dem wenigstens einen hergestellten dreidimensionalen Bauteil erschweren. Auch dieser Nachteil kann durch die vorliegende Erfindung behoben werden.

Und schließlich bietet die Entformung an einem vom Druckrahmen separaten Ort die Möglichkeit, die Herstellung zu beschleunigen, da unmittelbar nach dem Abtransport des Pakets aus Druckplattform samt der Begrenzungsvorrichtung und dem wenigstens einen hergestellten dreidimensionalen Bauteil bereits mit dem Druck eines weiteren Bauteils auf einer neuen Druckplattform begonnen werden kann, ohne dass die Entformung abgewartet werden muss.

Bei dem erfindungsgemäßen Verfahren zum Betrieb der erfindungsgemäßen Vorrichtung ist es vorgesehen, dass
- eine Begrenzungsvorrichtung zur seitlichen Begrenzung des Partikelmaterials mittels der hierzu vorgesehenen Koppelungsvorrichtung mit dem wenigstens einen Druckrahmen gekoppelt wird,
- der Druckrahmen samt der daran gekoppelten Begrenzungsvorrichtung auf Höhe der Druckplattform positioniert wird, und
- der Druckvorgang zur Herstellung des wenigstens eines dreidimensionalen Bauteils für die Bauindustrie durch schichtweise Auftragung des Partikelmaterials und Abgabe des wenigstens einen Bindemittels in den örtlich vorbestimmten Bereichen durchgeführt wird, wobei der Druckrahmen zumindest in die vertikale Richtung schrittweise mit einer Schrittweite, welche im Wesentlichen der Höhe der aufgetragenen Partikelmaterialschichten entspricht, angehoben wird.

Besonders vorteilhafte Ausführungsformen der erfindungsgemäßen Vorrichtung bzw. des erfindungsgemäßen Verfahren zum Betrieb der erfindungsgemäßen Vorrichtung sind in den abhängigen Ansprüchen 2-11 und 13-15 definiert.

Es ist gemäß einer bevorzugten Ausführungsform vorgesehen, dass die Koppelungsvorrichtung, mit welcher eine Begrenzungsvorrichtung zur seitlichen Begrenzung des Partikelmaterials mit dem wenigstens einen Druckrahmen lösbar koppelbar ist, und gegebenenfalls die Koppelungsvorrichtung, mit welcher die Begrenzungsvorrichtung zur seitlichen Begrenzung des Partikelmaterials mit der Druckplattform und/oder einer gegebenenfalls vorhandenen Transportvorrichtung lösbar koppelbar ist, wenigstens einen, vorzugsweise vier, Verriegelungsbolzen und korrespondierende Ausnehmungen umfasst.

Diese Koppelungsvorrichtungen können aber auch auf eine andere Art technisch realisiert werden. Es können beispielsweise auch lösbare Schnapp- und/oder Rastverbindungen zum Einsatz kommen. Weiterhin ist es denkbar, dass anstelle einer rein mechanischen Lösung eine elektromechanische Lösung, die auch mit einer Steuerungseinheit verbunden sein kann, zum Einsatz kommt.

Weitere Einzelheiten und Vorteile der Erfindung werden anhand der Figurenbeschreibung unter Bezugnahme auf die Zeichnungen im Folgenden näher erläutert. Darin zeigen:
- Fig. 1: eine Transportvorrichtung in einer perspektivischen Ansicht,
- Fig. 2: die Transportvorrichtung aus der Figur 1 mit einer darauf angeordneten Druckplattform,
- Fig. 3: die Anordnung aus einer Transportvorrichtung und einer Druckplattform gemäß Fig. 2 in Kombination mit einer Begrenzungsvorrichtung zur seitlichen Begrenzung des Partikelmaterials,
- Fig. 4: eine Vorrichtung zur Herstellung wenigstens eines dreidimensionalen Bauteils für die Bauindustrie gemäß einer bevorzugten Ausführungsform,
- Fig. 5: die Vorrichtung gemäß Fig. 4 mit einer darin angeordneten Transportvorrichtung, einer Druckplattform und einer Begrenzungsvorrichtung,
- Fig. 6a-6c: die Anordnung gemäß Fig. 5 zu Beginn des Druckvorgangs und zwar in einer perspektivischen Ansicht (Fig. 6a), in einer Seitenansicht (Fig. 6b) und in einer Querschnittsansicht entlang der in der Fig. 6b eingezeichneten Schnittebene 31 (Fig. 6c) und
- Fig. 7a-7c: die Anordnung gemäß den Figuren 6a-6c nach Abschluss des Druckvorgangs.

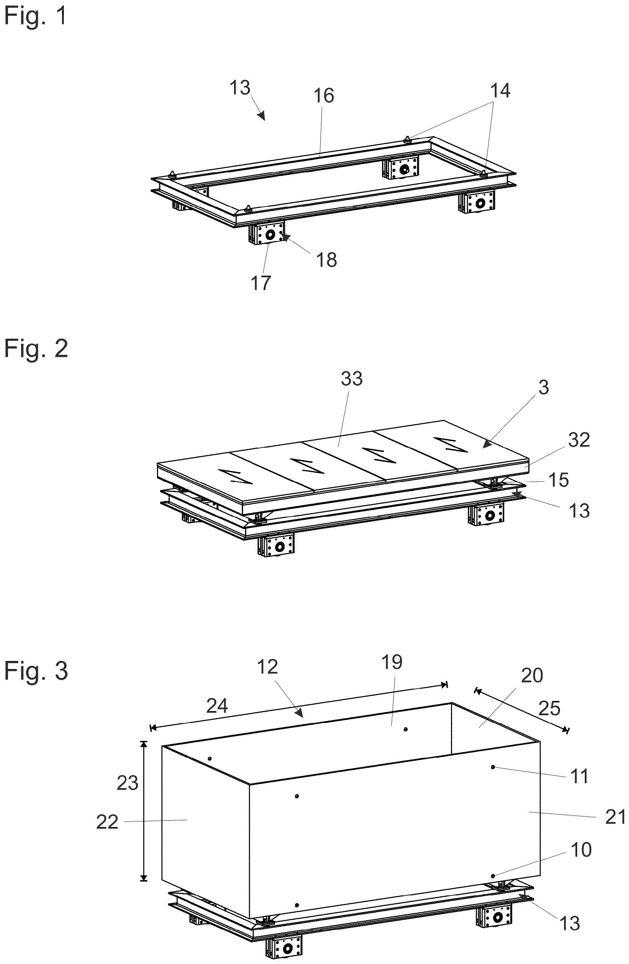

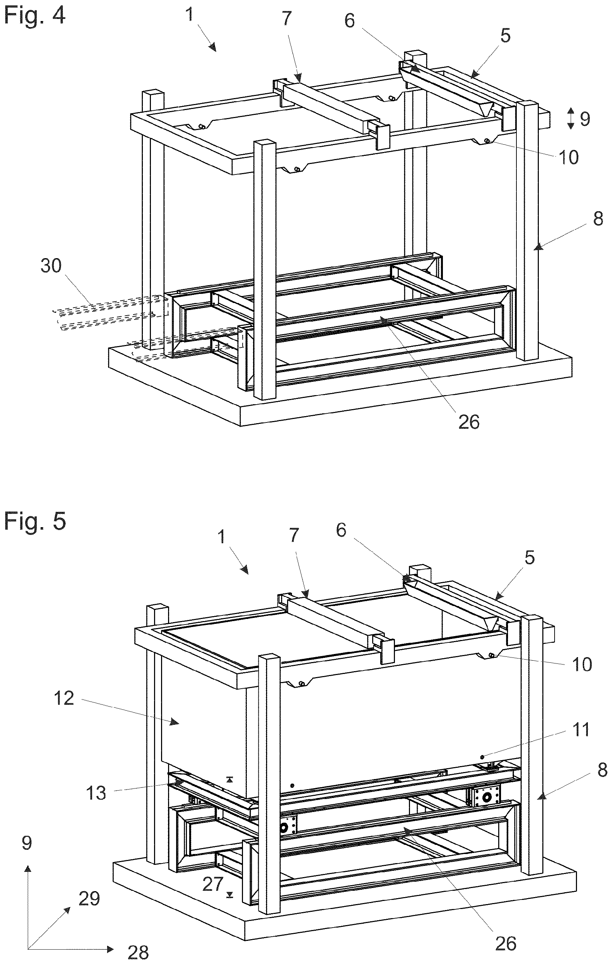

Figur 1 zeigt eine Transportvorrichtung 13, mit welcher eine Druckplattform 3 (vergleiche beispielsweise Fig. 2) in der Vorrichtung 1 (vergleiche beispielsweise Fig.4) positioniert und nach Abschluss des Druckvorgangs der Vorrichtung 1 wieder entnommen werden kann. Die Transportvorrichtung 13 umfasst einen Rahmen 16, an welchem Wälzkörper 17, vorzugsweise in Form von Laufrädern, zur Abstützung der Transportvorrichtung 13 an einem Untergrund angeordnet sind. Im vorliegenden Fall ist die Transportvorrichtung 13 über vier solche Wälzkörper 17 abgestützt. Je nach Größe der Druckplattform 3 können beispielsweise auch sechs oder mehr Wälzkörper 17 verwendet werden. Die Wälzkörper 17 sind jeweils mittels eines Elektromotors 18 antreibbar. Die Wälzkörper 17 sind in Gebrauchslage der Transportvorrichtung 13 an der Unterseite des Rahmens 16 angeordnet.

Der Rahmen 16 ist als rechteckiger Rahmen mit einer zentralen Öffnung ausgebildet und im Wesentlichen aus Stahl gefertigt. Im Bereich der vier Ecken des Rahmens 16 sind Vorsprünge 14 ausgebildet. Diese dienen zur verschiebesicheren Lagerung der Druckplattform 3 auf der Transportvorrichtung 13. Dazu greifen die Vorsprünge 14 in korrespondierende Ausnehmungen 15, welche in auf der Unterseite der Druckplattform 3 angeordnete Füße ausgebildet sind, ein.

Figur 2 zeigt die Transportvorrichtung 13 mit einer darauf angeordneten Druckplattform 3. Die Druckplattform 3 weist eine Trägerstruktur 32 auf, auf welcher eine in Gebrauchslage horizontal ausgerichtete ebene Platte 33, welche auch segmentiert sein kann, angeordnet ist. Die Druckplattform 3 ist ebenfalls im Wesentlichen aus Stahl gefertigt. Die Transportvorrichtung 13 und die Druckplattform 3 werden statisch so konstruiert, dass sich keine Torsion bzw. Durchbiegung in der Rahmenkonstruktion ergeben. Die Druckplattform 3 kann mittels einer Hebevorrichtung beispielsweise in Form eines Gabelstaplers auf der Transportvorrichtung 13 positionieren und von dieser wieder entfernt und beispielsweise einer weiteren Station wie einer Entpackungsanlage, einem Trocknerbereich oder einem Abstellbereich zugeführt werden.

Figur 3 zeigt die Anordnung aus der Transportvorrichtung 13 und der Druckplattform 3 gemäß Figur 2 in Kombination mit einer Begrenzungsvorrichtung 12 zur seitlichen Begrenzung von Partikelmaterial. Die Begrenzungsvorrichtung 12 ist im Wesentlichen aus vier rechtwinklig zueinander angeordneten Wänden 19, 20, 21 und 22 gebildet. Diese Wände 19,20, 21 und 22 stellen die Seitenwände eines gedachten quaderförmigen Körpers dar. Die Wände 19, 20, 21 und 22 der Begrenzungsvorrichtung 12 bestehen im Wesentlichen aus Aluminiumhohlprofilen und sind damit aus einem leichteren Material als die Druckplattform 3 und die Transportvorrichtung 13 aufgebaut. Die Wände 19, 20, 21 und 22 sind biegesteif ausgebildet, sodass es zu keiner Verformung kommt, wenn im Zuge des Druckvorgangs auf der Druckplattform 3 und in dem Innenraum der Begrenzungsvorrichtung 12 Partikelmaterial 4 angeordnet wird. Darüber hinaus weisen die Wände 19, 20, 21 und 22 zumindest auf ihrer Innenfläche eine glatte Oberfläche mit einem niedrigen Reibungskoeffizienten auf, wodurch ein Anhaften des Partikelmaterials 4 vermieden werden kann. Das bedeutet, dass die Wände 19, 20, 21 und 22 relativ zu dem Partikelmaterial 4 bewegt werden können, ohne dass es dabei zu einer nennenswerten Änderung der räumlichen Lage des benachbarten Partikelmaterials 4 kommt.

Die Begrenzungsvorrichtung 12 weist eine Höhe 23 von 1,5 m, eine Breite 24 von 4 m und eine Tiefe 25 von 2 m auf. Damit ergibt sich ein Druckvolumen von 12 m³. Im Bedarfsfall können die Dimensionen der Begrenzungsvorrichtung 12 auch an größere oder kleinere Druckvolumina angepasst werden.

Um die Anordnung aus der Transportvorrichtung 13, der Druckplattform 3 und der Begrenzungsvorrichtung 12 in ihrer Gesamtheit bewegen zu können, ohne dass es dabei zu einer Relativbewegung dieser drei Komponenten untereinander kommt, ist eine Kopplungsvorrichtung 10, 11 vorgesehen, mit welcher die Begrenzungsvorrichtung 12 mit der Druckplattform 3 lösbar koppelbar ist. Konkret wird die Kopplungsvorrichtung gebildet aus vier Verriegelungsbolzen 10, welche in korrespondierenden Ausnehmungen 11 eingreifen, wobei diese korrespondierenden Ausnehmungen 11 sowohl in der Begrenzungsvorrichtung 12 als auch in der Druckplattform 3 angeordnet sind. Zur lösbaren Kopplung der Begrenzungsvorrichtung 12 mit der Druckplattform 3 werden Ausnehmungen 11 verwendet, die in Gebrauchslage im unteren Bereich der Begrenzungsvorrichtung 12 ausgebildet sind. Auf den Zweck der im oberen Bereich der Begrenzungsvorrichtung 12 angeordneten Ausnehmungen 11 wird nachfolgend eingegangen.

Figur 4 zeigt nun eine bevorzugte Ausführungsform einer Vorrichtung 1 zur Herstellung wenigstens eines dreidimensionalen Bauteils für die Bauindustrie. Die Vorrichtung 1 weist ein Gestell 8 auf, welches im Wesentlichen gebildet wird aus vier in vertikaler Richtung 9 ausgerichteten Pfosten. An dem Gestell 8 ist ein Druckrahmen 5 in Gebrauchslage der Vorrichtung 1 in vertikaler Richtung 9 verstellbar gelagert. An dem Druckrahmen 5 sind ein Druckkopf 7 zur Abgabe wenigstens eines Bindemittels an örtlich vorbestimmten Bereichen sowie eine benachbart dazu angeordnete Beschichtungsvorrichtunge 6 zur schichtweisen Auftragung von Partikelmaterial verfahrbar gelagert.

Die Vorrichtung 1 weist weiterhin eine Abstützvorrichtung 26 auf. Die Abstützvorrichtung 26 umfasst zwei voneinander beabstandete Schienen, auf denen die in Figur 3 gezeigte Anordnung aus Transportvorrichtung 13, Druckplattform 3 und Begrenzungsvorrichtung 12 positionierbar ist. Um diese Anordnung in die Vorrichtung hineinbefördern zu können, können anschließende Schienen 30 (in der Figur 4 mit gestrichelten Linien angedeutet) vorgesehen sein.

Figur 5 zeigt die Vorrichtung 1 gemäß Figur 4 mit in der Vorrichtung 1 positionierter Anordnung aus Transportvorrichtung 13, Druckplattform 3 und Begrenzungsvorrichtung 12 gemäß Figur 3. Zur Vorbereitung des Druckvorgangs wird die Begrenzungsvorrichtung 12 mit dem Druckrahmen 5 lösbar gekoppelt, indem Verriegelungsbolzen 10 in die im oberen Bereich der Begrenzungsvorrichtung 12 angeordnete Ausnehmungen 11 hineingeschoben werden. Gleichzeitig oder daran anschließend wird die Kopplung zwischen der Begrenzungsvorrichtung 12 und der Druckplattform 3 aufgehoben.

In weiterer Folge wird der Druckrahmen 5 und damit die daran gekoppelte Begrenzungsvorrichtung 12 abgesenkt und zwar so weit, dass sich der Druckkopf 7 und die Beschichtungsvorrichtunge 6 unmittelbar über der Druckplattform 3 befinden und mit dem Druckvorgang begonnen werden kann. Es bietet sich dabei an, dass die Anordnung aus der Abstützvorrichtung 26, der Druckplattform 3 und der Transportvorrichtung 13 eine Gesamthöhe 27 aufweist, welche mindestens der Höhe 23 der Begrenzungsvorrichtung 12 (vergleiche Figur 3) entspricht. Ergänzend oder alternativ dazu kann es auch vorgesehen sein, dass im Untergrund eine Ausnehmung zur Aufnahme der abgesenkten Begrenzungsvorrichtung 12 ausgebildet ist.

Es sei noch darauf hingewiesen, dass die x- und y-Komponenten, welche die horizontale Ebene definieren, mit den Bezugszeichen 28 und 29 versehen sind.

Es wird nun mit dem Druckvorgang begonnen. Dabei wird mittels der Beschichtungsvorrichtunge 6 schichtweise ein Partikelmaterial 4 aufgetragen und dieses mittels wenigstens eines Bindemittels und gegebenenfalls eines Härtemittels an örtlich vorbestimmten Bereichen verfestigt und miteinander verbunden. Das wenigstens eine Bindemittel wird dabei mit Hilfe des Druckkopfs 7 an den örtlich vorbestimmten Bereichen versprüht. Nachdem auf diese Weise eine Schicht mit einer bestimmten Schichtdicke aufgetragen und bearbeitet wurde, wird der Druckrahmen 5 in vertikaler Richtung 9 um einen bestimmten Weg 34 angehoben. Dieser Weg 34 definiert die Dicke der nachfolgend aufgetragenen Schicht. Da die Begrenzungsvorrichtung 12 mit dem Druckrahmen 5 gekoppelt ist, wird die Begrenzungsvorrichtung 12 zwangsweise um denselben Weg 34 in vertikaler Richtung 9 mitbewegt. Diese Vorgänge wiederholen sich so lange, bis das gesamte zur Verfügung stehende Druckvolumen ausgereizt ist bzw. bis das wenigstens eine herzustellende dreidimensionale Bauteil fertig gestellt ist.

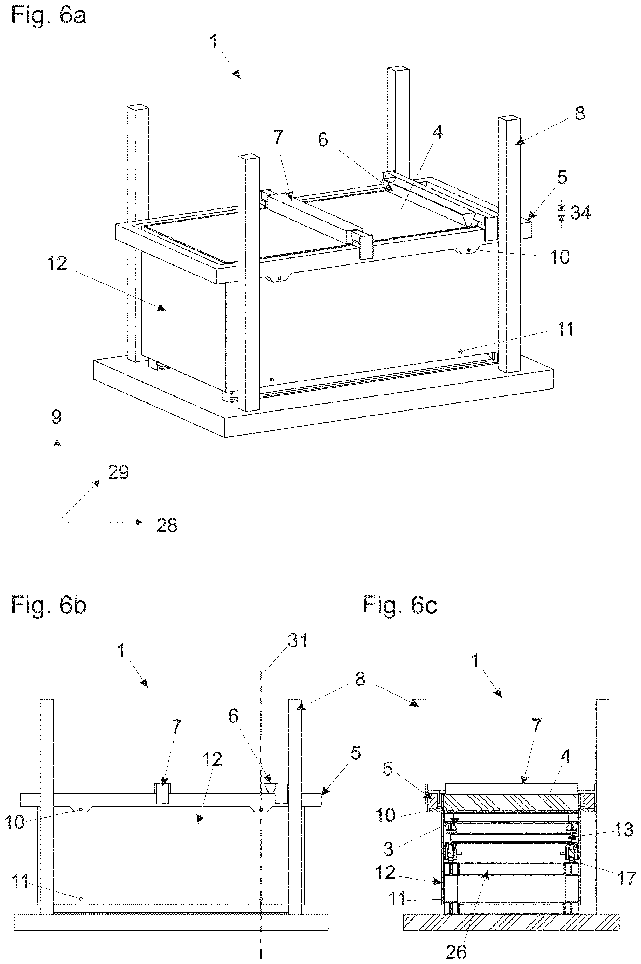

Die Figuren 6a, 6b und 6c zeigen den Zustand der Vorrichtung 1 unmittelbar nach Beginn des Druckvorgangs. Dabei wurden bereits einige wenige Schichten des Partikelmaterials 4 aufgetragen und an örtlich vorbestimmten Bereichen verfestigt und miteinander verbunden.

Die örtlich vorbestimmten Bereiche werden basierend auf Computerdaten von dem Druckkopf 7 angefahren.

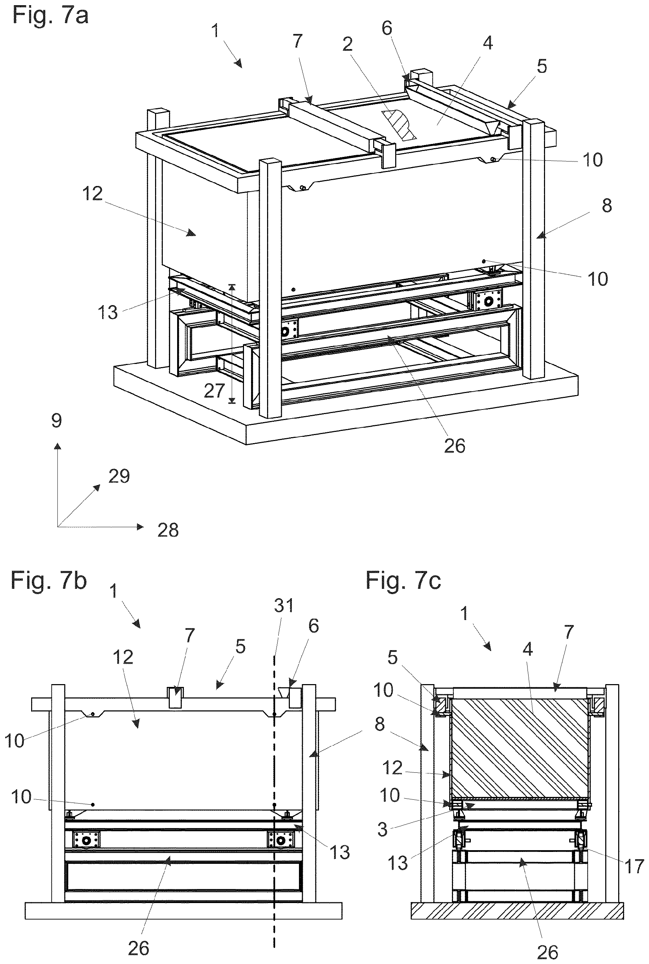

Die Figuren 7a-7c zeigen die Vorrichtung 1 nach abgeschlossenem Druckvorgang. Schematisch angedeutet ist ein hergestelltes dreidimensionales Bauteil 2, welches im schraffierten Bereich aus verfestigtem und miteinander verbundenem Partikelmaterial besteht. Das dreidimensionale Bauteil 2 wird von nicht verfestigtem losem Partikelmaterial 4 umgeben.

Zur Ausformung des dreidimensionalen Bauteils 2 wird die Kopplung zwischen der Begrenzungsvorrichtung 12 und der Druckplattform 3 wieder hergestellt. Die Kopplung zwischen der Begrenzungsvorrichtung 12 und dem Druckrahmen 5 wird aufgehoben. Der Druckrahmen 5 wird ein Stück nach oben bewegt, sodass die Anordnung aus der Transportvorrichtung 13, der Druckplattform 3 und der Begrenzungsvorrichtung 12 aus der Vorrichtung 1 herausgefahren werden kann, ohne dass die Begrenzungsvorrichtung 12 mit dem Druckrahmen 5 kollidiert.

Zumindest die Druckplattform 3 zusammen mit der Begrenzungsvorrichtung 12 und dem gedruckten Innenleben wird in weiterer Folge zumindest einer Entpackungsstation zugeführt. Dort wird die Kopplung zwischen der Begrenzungsvorrichtung 12 und der Druckplattform 3 aufgehoben und die Begrenzungsvorrichtung 12 in vertikaler Richtung nach oben oder unten verfahren. Dabei wird ein großer Teil des losen Partikelmaterials 4 von selbst von der Druckplattform 3 herabfallen. Übrig bleibt das hergestellte dreidimensionale Bauteil 2 für die Bauindustrie.

## Patentansprüche

1. Vorrichtung (1) zur Herstellung wenigstens eines dreidimensionalen Bauteils (2) für die Bauindustrie aus einer Mehrzahl von auf einer Druckplattform (3) übereinander angeordneter Schichten aus Partikelmaterial (4), die in örtlich vorbestimmten Bereichen verfestigt und miteinander zum wenigstens einen dreidimensionalen Bauteil (2) verbunden sind, umfassend wenigstens einen Druckrahmen (5), an welchem wenigstens eine Beschichtungsvorrichtung (6) zur schichtweisen Auftragung des Partikelmaterials (4) auf der Druckplattform (3) und wenigstens ein Druckkopf (7) zur Abgabe wenigstens eines Bindemittels an den örtlich vorbestimmten Bereichen verfahrbar gelagert sind, und ein Gestell (8), an welchem der Druckrahmen (5) in Gebrauchslage der Vorrichtung (1) zumindest in vertikaler Richtung (9) verstellbar gelagert ist, wobei eine Koppelungsvorrichtung (10, 11) vorgesehen ist, mit welcher eine Begrenzungsvorrichtung (12) zur seitlichen Begrenzung des Partikelmaterials (4) mit dem wenigstens einen Druckrahmen (5) lösbar koppelbar ist, so dass die Begrenzungsvorrichtung (12) mit dem Druckrahmen (5) bei einer Verstellung zumindest in die vertikale Richtung (9) mitbewegbar ist.

2. Vorrichtung (1) nach Anspruch 1, wobei eine Transportvorrichtung (13) vorgesehen ist, auf welcher die Druckplattform (3) angeordnet ist, vorzugsweise wobei die Druckplattform (3) über Vorsprünge (14) und korrespondierende Ausnehmungen (15) auf der Transportvorrichtung (13) verschiebesicher gelagert ist.

3. Vorrichtung (1) nach Anspruch 2, wobei die Transportvorrichtung (13) im Wesentlichen aus einem Rahmen (16) gebildet ist, an welchem Wälzkörper (17) zur Abstützung der Transportvorrichtung (13) an einem Untergrund angeordnet sind.

4. Vorrichtung (1) nach Anspruch 3, wobei die Wälzkörper (17), vorzugsweise mittels Elektromotoren (18), antreibbar sind.

5. Vorrichtung (1) nach einem der Ansprüche 1 bis 4, wobei eine weitere Koppelungsvorrichtung (10, 11) vorgesehen ist, mit welcher die Begrenzungsvorrichtung (12) zur seitlichen Begrenzung des Partikelmaterials (4) mit der Druckplattform (3) und/oder einer gegebenenfalls vorhandenen Transportvorrichtung (13) lösbar koppelbar ist.

6. Vorrichtung (1) nach einem der Ansprüche 1 bis 5, wobei die Begrenzungsvorrichtung (12) im Wesentlichen aus vier rechtwinklig zueinander angeordneten Wänden (19, 20, 21, 22) gebildet ist.

7. Vorrichtung (1) nach Anspruch 6, wobei die Wände (19, 20, 21, 22) der Begrenzungsvorrichtung (12)
- im Wesentlichen aus Hohlprofilen, vorzugsweise aus Aluminium, bestehen, und/oder
- biegesteif ausgebildet sind, und/oder
- eine glatte Oberfläche mit einem niedrigen Reibungskoeffizienten aufweisen, um ein Anhaften des Partikelmaterials (4) zu vermeiden.

8. Vorrichtung (1) nach einem der Ansprüche 1 bis 7, wobei die Begrenzungsvorrichtung (12)
- eine Höhe (23) von 1 bis 2 m, vorzugsweise 1,5 m, und/oder
- eine Breite (24) von 3 bis 5 m, vorzugsweise 4 m, und/oder
- eine Tiefe (25) von 1 bis 3 m, vorzugsweise 2 m,
aufweist.

9. Vorrichtung (1) nach einem der Ansprüche 1 bis 8, wobei eine, vorzugsweise schienenförmige, Abstützvorrichtung (26) zur Abstützung der Druckplattform (3) und einer gegebenenfalls vorhandenen Transportvorrichtung (13) vorgesehen ist.

10. Vorrichtung (1) nach Anspruch 9, wobei die Anordnung aus der Abstützvorrichtung (26), der Druckplattform (3) und einer gegebenenfalls vorhandenen Transportvorrichtung (13) eine Gesamthöhe (27) aufweist, welche mindestens der Höhe (23) der Begrenzungsvorrichtung (12) entspricht.

11. Vorrichtung (1) nach einem der Ansprüche 1 bis 10, wobei die Koppelungsvorrichtung (10, 11), mit welcher eine Begrenzungsvorrichtung (12) zur seitlichen Begrenzung des Partikelmaterials (4) mit dem wenigstens einen Druckrahmen (5) lösbar koppelbar ist, und gegebenenfalls die Koppelungsvorrichtung (10, 11), mit welcher die Begrenzungsvorrichtung (12) zur seitlichen Begrenzung des Partikelmaterials (4) mit der Druckplattform (3) und/oder einer gegebenenfalls vorhandenen Transportvorrichtung (13) lösbar koppelbar ist, wenigstens einen, vorzugsweise vier, Verriegelungsbolzen (10) und korrespondierende Ausnehmungen (11) umfasst.

12. Verfahren zum Betrieb einer Vorrichtung (1) nach einem der Ansprüche 1 bis 11, wobei
- die Begrenzungsvorrichtung (12) zur seitlichen Begrenzung des Partikelmaterials (4) mittels der hierzu vorgesehenen Koppelungsvorrichtung (10, 11) mit dem wenigstens einen Druckrahmen (5) gekoppelt wird,
- der Druckrahmen (5) samt der daran gekoppelten Begrenzungsvorrichtung (12) auf Höhe der Druckplattform (3) positioniert wird, und
- der Druckvorgang zur Herstellung des wenigstens eines dreidimensionalen Bauteils (2) für die Bauindustrie durch schichtweise Auftragung des Partikelmaterials (4) und Abgabe des wenigstens einen Bindemittels in den örtlich vorbestimmten Bereichen durchgeführt wird, wobei der Druckrahmen (5) zumindest in die vertikale Richtung (9) schrittweise mit einer Schrittweite, welche im Wesentlichen der Höhe der aufgetragenen Partikelmaterialschichten entspricht, angehoben wird.

13. Verfahren nach Anspruch 12, wobei die Begrenzungsvorrichtung (12) nach Abschluss des Druckvorgangs vom wenigstens einen Druckrahmen (5) entkoppelt wird.

14. Verfahren nach Anspruch 12 oder 13, wobei die Druckplattform (3) und die Begrenzungsvorrichtung (12) zu Beginn des Verfahrens in der Vorrichtung (1) positioniert und nach Abschluss des Druckvorgangs der Vorrichtung (1) wieder entnommen werden.

15. Verfahren nach einem der Ansprüche 12 bis 14, wobei die Begrenzungsvorrichtung (12) zu Beginn des Verfahrens mittels der hierzu vorgesehenen Koppelungsvorrichtung (10, 11) mit der Druckplattform (3) und/oder einer gegebenenfalls vorhandenen Transportvorrichtung (13) gekoppelt ist und diese Koppelung aufgehoben wird.

## Claims

1. Apparatus (1) for producing at least one 3-dimensional component (2) for the building industry from a plurality of layers of particulate material (4) which are arranged in mutually superposed relationship on a printing platform (3) and which are solidified in locally predetermined regions and are connected together to form the at least one 3-dimensional component (2), including at least one printing frame (5) on which at least one coating device (6) for layer-wise application of the particulate material on the printing platform (3) and at least one printing head (7) for the delivery of at least one binding agent at the locally predetermined regions are displaceably mounted, and a frame (8) on which the printing frame (5) is mounted displaceably at least in the vertical direction (9) in the position of use of the apparatus (1), wherein there is provided a coupling device (10, 11) with which a delimiting device (12) for laterally delimiting the particulate material (4) can be releasably coupled to the at least one printing frame (5) so that the delimiting device (12) is moveable with the printing frame (5) upon a displacement at least in the vertical direction (9).

2. Apparatus (1) according to claim 1 wherein there is provided a transport device (13) on which the printing platform (3) is arranged, preferably wherein the printing platform (3) is mounted on the transport device (13) non-displaceably by way of projections (14) and corresponding recesses (15).

3. Apparatus (1) according to claim 2 wherein the transport device (13) is formed substantially from a frame (16) on which rolling bodies (17) are arranged for supporting the transport device (13) on a support surface.

4. Apparatus (1) according to claim 3 wherein the rolling bodies (17) are drivable preferably by means of electric motors (18).

5. Apparatus (1) according to one of claims 1 to 4 wherein there is provided a further coupling device (10, 11) with which the delimiting device (12) for laterally delimiting the particulate material can be coupled releasably to the printing platform (3) and/or to a transport device (13) which is possibly provided.

6. Apparatus (1) according to one of claims 1 to 5 wherein the delimiting device (12) is formed substantially from four walls (19, 20, 21, 22) arranged at a right angle to each other.

7. Apparatus (1) according to claim 6 wherein the walls (19, 20, 21, 22) of the delimiting device (12)
- substantially comprise hollow profile members, preferably of aluminium, and/or
- are of a flexurally stiff configuration, and/or
- have a smooth surface with a low coefficient of friction to avoid adhesion of the particulate material (4).

8. Apparatus (1) according to one of claims 1 to 7 wherein the delimiting device (12) is
- of a height (23) of 1 to 2 m, preferably 1.5 m, and/or
- is of a width (24) of 3 to 5 m, preferably 4 m, and/or
- is of a depth (25) of 1 to 3 m, preferably 2 m.

9. Apparatus (1) according to one of claims 1 to 8 wherein there is provided a support device (21), preferably in rail form, for supporting the printing platform (3) and a transport device (13) which is possibly provided.

10. Apparatus (1) according to claim 9 wherein the arrangement comprising the support device (26), the printing platform (3) and a transport device (13) which is possibly provided is of a total height (27) which corresponds at least to the height (23) of the delimiting device (12).

11. Apparatus (1) according to one of claims 1 to 10 wherein the coupling device (10, 11) with which a delimiting device (12) for laterally delimiting the particulate material (4) can be releasably coupled to the at least one printing frame (5) and optionally the coupling device (10, 11) with which the delimiting device (12) for laterally delimiting the particulate material (4) can be releasably coupled to the printing platform (3) and/or a transport device (13) which is possibly provided includes at least one and preferably four locking pins (10) and corresponding openings (11).

12. A method of operating an apparatus (1) according to one of claims 1 to 11 wherein
- the delimiting device (12) for laterally delimiting the particulate material (4) is coupled to the at least one printing frame (5) by means of the coupling device (10, 11) provided for that purpose,
- the printing frame (5) together with the delimiting device (12) coupled thereto is positioned at the height of the printing platform (3), and
- the printing operation for producing the at least one 3-dimensional component (2) for the building industry is performed by layer-wise application of the particulate material (4) and delivery of the at least one binding agent in the locally predetermined regions, wherein the printing frame (5) is lifted at least in the vertical direction (9) in stepwise manner with a stepping dimension substantially corresponding to the height of the applied particulate material layers.

13. A method according to claim 12 wherein the delimiting device (12) is uncoupled from the at least one printing frame (5) after conclusion of the printing operation.

14. A method according to claim 12 or claim 13 wherein the printing platform (3) and the delimiting device (2) are positioned in the apparatus (1) at the beginning of the method and are removed from the apparatus (1) again after conclusion of the printing operation.

15. A method according to one of claims 12 to 14 wherein the delimiting device (8) is coupled to the printing platform (3) and/or a transport device (13) which is possibly provided by means of the coupling device (10, 11) provided for that purpose at the beginning of the method and said coupling is released.

## Revendications

1. Dispositif (1) de fabrication d'au moins un élément de construction tridimensionnel (2) pour l'industrie du bâtiment composé d'une pluralité de couches en matériau particulaire (4) disposées les unes au-dessus des autres sur une plate-forme d'impression (3), qui sont fixées dans des zones prédéterminées localement et reliées ensemble en au moins un élément de construction tridimensionnel (2), comprenant au moins un cadre d'impression (5), sur lequel sont logés de façon déplaçable au moins un dispositif d'enduction (6) pour l'application par couches du matériau particulaire (4) sur la plate-forme d'impression (3) et au moins une tête d'impression (7) pour la distribution d'au moins un agent liant sur les zones prédéterminées localement, et un bâti (8), sur lequel le cadre d'impression (5) dans la position d'utilisation du dispositif (1) est logé de façon déplaçable au moins dans le sens vertical (9), dans lequel est prévu un dispositif de couplage (10, 11) avec lequel un dispositif de limitation (12), destiné à la limitation latérale du matériau particulaire (4), peut être couplé de façon détachable au au moins un cadre d'impression (5) de sorte que le dispositif de limitation (12) peut être déplacé avec le cadre d'impression (5) lors d'un mouvement au moins dans le sens vertical (9).

2. Dispositif (1) selon la revendication 1 dans lequel est prévu un dispositif de transport (13), sur lequel est disposée la plate-forme d'impression (3), de préférence dans lequel la plate-forme d'impression (3) est logée de façon inamovible sur le dispositif de transport (13) au moyen de parties faisant saillie (14) et d'évidements correspondants (15).

3. Dispositif (1) selon la revendication 2, dans lequel le dispositif de transport (13) est formé essentiellement d'un cadre (16) sur lequel des éléments roulants (17) sont disposés pour appuyer le dispositif de transport (13) sur un fond.

4. Dispositif (1) selon la revendication 3, dans lequel les éléments roulants (17) peuvent être actionnés, de préférence à l'aide de moteurs électriques (18).

5. Dispositif (1) selon l'une des revendications 1 à 4, dans lequel un autre dispositif de couplage (10, 11) est prévu, avec lequel le dispositif de limitation (12), destiné à limiter latéralement le matériau particulaire (4), peut être couplé de façon détachable à la plate-forme d'impression (3) et / ou à un dispositif de transport (13) présent le cas échéant.

6. Dispositif (1) selon l'une des revendications 1 à 5, dans lequel le dispositif de limitation (12) est formé essentiellement de quatre parois (19, 20, 21, 22) disposées à angles droits les unes par rapport aux autres.

7. Dispositif (1) selon la revendication 6, dans lequel les parois (19, 20, 21, 22) du dispositif de limitation (12)
- se composent essentiellement de profils creux, de préférence en aluminium, et / ou
- sont conçues de façon rigide en flexion, et / ou
- présentent une surface lisse avec un coefficient de frottement faible pour éviter une adhésion du matériau particulaire (4).

8. Dispositif (1) selon l'une des revendications 1 à 7, dans lequel le dispositif de limitation (12) présente
- une hauteur (23) de 1 à 2 m, de préférence 1,5 m, et / ou
- une largeur (24) de 3 à 5 m, de préférence 4 m, et / ou
- une profondeur (25) de 1 à 3 m, de préférence 2 m.

9. Dispositif (1) selon l'une des revendications 1 à 8, dans lequel un dispositif d'appui (26), de préférence en forme de rail, est prévu pour appuyer la plate-forme d'impression (3) et un dispositif de transport (13) présent le cas échéant.

10. Dispositif (1) selon la revendication 9, dans lequel l'ensemble composé du dispositif d'appui (26), de la plate-forme d'impression (3) et d'un dispositif de transport (13) présent le cas échéant, présente une hauteur totale (27), laquelle correspond au moins à la hauteur (23) du dispositif de limitation (12).

11. Dispositif (1) selon l'une des revendications 1 à 10, dans lequel le dispositif de couplage (10, 11), avec lequel un dispositif de limitation (12), destiné à la limitation latérale du matériau particulaire (4), peut être couplé de façon détachable au au moins un cadre d'impression (5), et le cas échéant, le dispositif de couplage (10, 11) avec lequel le dispositif de limitation (12), destiné à la limitation latérale du matériau particulaire (4), peut être couplé de façon détachable à la plate-forme d'impression (3) et / ou à un dispositif de transport (13) présent le cas échéant, comprend au moins un, de préférence quatre, boulons de verrouillage (10) et des évidements correspondants (11).

12. Procédé pour le fonctionnement d'un dispositif (1) selon l'une des revendications 1 à 11, dans lequel
- le dispositif de limitation (12), destiné à la limitation latérale du matériau particulaire (4), est couplé au au moins un cadre d'impression (5) à l'aide du dispositif de couplage (10, 11) prévu à cet effet,
- le cadre d'impression (5), avec le dispositif de limitation (12) lui étant couplé, est positionné à hauteur de la plate-forme d'impression (3), et
- le procédé d'impression pour fabriquer le au moins un élément de construction tridimensionnel (2) est réalisé pour l'industrie du bâtiment par application par couches du matériau particulaire (4) et distribution du au moins un agent liant dans les zones prédéterminées localement, dans lequel le cadre d'impression (5) est soulevé au moins dans le sens vertical (5) par étapes à une cadence qui correspond essentiellement à la hauteur des couches de matériau particulaire appliquées.

13. Procédé selon la revendication 12, dans lequel le dispositif de limitation (12) après achèvement du procédé d'impression est découplé du au moins un cadre d'impression (5).

14. Procédé selon la revendication 12 ou 13, dans lequel la plate-forme d'impression (3) et le dispositif de limitation (12), au début du procédé, sont positionnées dans le dispositif (1) et, après achèvement du procédé d'impression, sont de nouveau retirées du dispositif (1).

15. Procédé selon l'une des revendications 12 à 14, dans lequel le dispositif de limitation (12) est couplé au début du procédé, à l'aide du dispositif de couplage (10, 11) prévu à cet effet, à la plate-forme d'impression (3) et / ou à un dispositif de transport (13) présent le cas échéant et ce couplage est supprimé.
